# EUROPÄISCHE PATENTANMELDUNG

(11) **EP 2 418 375 A1**
(43) Veröffentlichungstag der Anmeldung: **15.02.2012**
(21) Anmeldenummer: 11006534.9
(22) Anmeldetag: 09.08.2011
(51) Int. Cl.: F03B 13/06, F03D 9/02

(54) **Vorrichtung und Verfahren zum Speichern elektrischer Energie**

(30) Priorität: 10.08.2010 DE 102010034160; 05.11.2010 DE 102010050313
(71) Anmelder: Ebrecht, Wilhelm, 31234 Edemissen (DE)
(72) Erfinder: Ebrecht, Wilhelm, 31234 Edemissen (DE)
(74) Vertreter: Stornebel, Kai

(57) **Zusammenfassung**

Die Erfindung betrifft ein Pumpspeicherkraftwerk mit einer Pumpeinrichtung (20), die ein Speichermedium auf ein Niveau höherer potentieller Energie fördert, einer Umwandlungseinrichtung (20), die potentielle Energie des Speichermediums in elektrische Energie umwandelt, und einer Speicherkammer (10) zum Einspeichern und Ausspeichern des Speichermediums. Aufgabe der Erfindung ist es, ein verbessertes Pumpspeicherkraftwerk und Verfahren bereitzustellen, mittels derer auch auf dem offenen Meer elektrische in potentielle Energie gespeichert werden kann und zudem eine einfache und sichere Montage und/oder Wartung ermöglicht wird. Diese Aufgabe wird dadurch gelöst, dass die Speicherkammer (10) schwimmfähig ausgebildet ist und die Umwandlungseinrichtung (20) beim Einspeichern des Speichermediums in die Speicherkammer (10) elektrische Energie erzeugt.

## Beschreibung

Die Erfindung betrifft ein Pumpspeicherkraftwerk mit einer Pumpeinrichtung, die ein Speichermedium auf ein Niveau höherer potentieller Energie fördert, einer Umwandlungseinrichtung, die potentielle Energie des Speichermediums in elektrische Energie umwandelt, und einer Speicherkammer zum Einspeichern und Ausspeichern des Speichermediums. Die Erfindung betrifft ebenfalls ein Verfahren zum Speichern elektrischer Energie mittels Umwandlung in potentielle Energie, bei dem ein Speichermedium in eine Speicherkammer unter Veränderung der potentiellen Energie des Speichermediums wechselweise ein- oder ausgespeichert wird.

Pumpspeicherkraftwerke und die damit angewendeten Verfahren zum Speichern elektrischer Energie sind vielfach bekannt. In der Regel werden Pumpspeicherkraftwerke genutzt, um bei Überkapazitäten in einem elektrischen Stromnetz elektrische Energie mittels Umwandlung in potentielle Energie zu speichern. Somit können insbesondere Spitzenlasten und Schwachlasten in einem elektrischen Stromnetz ausgeglichen werden.

Zur Speicherung elektrischer Energie mittels Umwandlung in potentielle Energie sind insbesondere Pumpspeicherkraftwerke bekannt, bei denen als Speichermedium Wasser vorzugsweise in einem gebirgigen Gelände von einem niedrigen Niveau, beispielsweise einem Tal, auf ein höheres Niveau, beispielsweise einem Berg, gefördert wird. Andere Ausgestaltungen ermöglichen eine Speicherung elektrischer Energie mittels Umwandlung in potentielle Energie auch in flachen bzw. ebenen Regionen oder auch in einem Wasserbecken, beispielsweise einem See oder Meer.

Die DE 10 2006 059 233 A1 beschreibt ein Speicherwerk in einem See oder Meer, bei dem zur Einspeicherung elektrischer Energie ein Auftriebskörper aus einer geringen Wassertiefe in eine große Wassertiefe bewegt wird und zur Ausspeicherung der elektrischen Energie der Auftriebskörper in Richtung der Wasseroberfläche aufschnellt.

Die DE 10 2008 019 504 A1 beschreibt ein Pumpspeicherkraftwerk in einer Ebene, bei dem ein erster Wasserspiegel gegenüber einem zweiten Wasserspiegel zeitweise abgesenkt ist und der dadurch ausgebildete Höhenunterschied des Wassers zur Stromerzeugung genutzt wird.

Die DE 32 01 507 A1 beschreibt einen Stromerzeuger, der mittels eines schwimmfähigen Gehäuses an einer Wasseroberfläche unterhalb eines Wasserfalls angeordnet ist und durch Umwandlung der potentiellen bzw. kinetischen Energie des herabstürzenden Wassers elektrischen Strom erzeugt.

Aufgabe der vorliegenden Erfindung ist es, ein verbessertes Pumpspeicherkraftwerk und Verfahren bereitzustellen, mittels derer auch auf dem offenen Meer elektrische in potentielle Energie gespeichert werden kann und zudem eine einfache und sichere Montage und/oder Wartung ermöglicht wird.

Erfindungsgemäß wird diese Aufgabe durch eine Vorrichtung mit den Merkmalen des Hauptanspruches und ein Verfahren mit den Merkmalen des nebengeordneten Anspruchs gelöst. Vorteilhafte Ausgestaltungen und Weiterbildungen der Erfindung sind in den jeweiligen Unteransprüchen, der Beschreibung und den Figuren aufgeführt.

Die erfindungsgemäße Vorrichtung eines Pumpspeicherkraftwerks mit einer Pumpeinrichtung, die ein Speichermedium auf ein Niveau höherer potentieller Energie fördert, einer Umwandlungseinrichtung, die potentielle Energie des Speichermediums in elektrische Energie umwandelt, und einer Speicherkammer zum Einspeichern und Ausspeichern des Speichermediums, sieht vor, dass die Speicherkammer schwimmfähig ausgebildet ist und die Umwandlungseinrichtung beim Einspeichern des Speichermediums in die Speicherkammer elektrische Energie erzeugt.

Es ist erfindungsgemäß vorgesehen, dass das Pumpspeicherkraftwerk vollständig auf dem offenen Meer betrieben werden kann und dass als Speichermedium insbesondere Wasser verwendet wird. Die Ein- und Ausspeicherung des Wassers erfolgt zwischen zwei Reservoirs, nämlich der Speicherkammer und dem Meer, wobei der Wasserspiegel innerhalb der Speicherkammer dauerhaft unterhalb dem des Meeresspiegels liegt. Mittels der Pumpeinrichtung wird das Wasser zur Ausspeicherung von einem Niveau niedriger potentieller Energie, also aus der Speicherkammer, auf ein Niveau höherer potentieller Energie, also in das Meer, gepumpt. Während der Ausspeicherung des Wassers verringert sich das Gewicht der Speicherkammer, so dass die Speicherkammer im Meerwasser erfindungsgemäß Auftrieb erhält. Dadurch schwimmt die Speicherkammer bei Ausspeicherung auf. Bei der Einspeicherung bzw. Einströmen des Wassers aus dem Meer in die Speicherkammer wird von dem einströmenden Wasser eine Umwandlungseinrichtung angetrieben, die die potentielle bzw. kinetische Energie des Wassers in elektrische Energie umwandelt. Aufgrund des steigenden Gewichtes der Speicherkammer sinkt die Speicherkammer ab, so dass aufgrund des einströmenden Wassers der ursprüngliche Höhenunterschied aufgrund des anfänglichen Tiefganges der Speicherkammer erhalten bleibt. Durch den relativ geringen Höhenunterschied zwischen dem Meeresspiegel und dem Wasserniveau in der Speicherkammer wirken nur relativ geringe Druckkräfte auf die Wandung der Speicherkammer, so dass diese relativ dünn ausgeführt werden können. Alternativ kann das Pumpspeicherwerk auch auf einem anderen Gewässer betrieben werden, das ausreichend groß und tief ist. Das erfindungsgemäße Pumpspeicherkraftwerk ermöglicht somit die Speicherung elektrischer Energie ohne Platzbedarf oder landschaftliche Beeinträchtigungen auf dem Festland.

Eine Ausgestaltung der Erfindung sieht vor, dass die Pump- und Umwandlungseinrichtung an der Speicherkammer höhenverlagerbar befestigt sind. Dadurch ist das Pumpspeicherkraftwerk zum einen als eine zusammenhängende Anlage aufgebaut, zum anderen aber in zwei relativ zueinander bewegliche Anlagenteile gegliedert. Dadurch wird eine Bewegung der Pump- und Umwandlungseinrichtung relativ zur Speicherkammer ermöglicht. Die Bewegung der Pump- und Umwandlungseinrichtung relativ zur Speicherkammer erfolgt bevorzugt lediglich in vertikaler Richtung, also höhenverlagernd, bei Absinken und Aufschwimmen der Speicherkammer. Dies ermöglicht insbesondere, dass die Pump- und Umwandlungseinrichtung bei Absinken oder Aufschwimmen der Speicherkammer fortdauernd an der Wasseroberfläche verbleiben kann.

Die Pump- und Umwandlungseinrichtung sind vorzugsweise schwimmbar ausgebildet und permanent an der Wasseroberfläche angeordnet. Dadurch ist es ermöglicht, die Pump- und Umwandlungseinrichtung an der Meeresoberfläche, insbesondere ohne zeit-, kosten- und sicherheitsintensive Tauchmanöver, zu installieren, zu betreiben und/oder zu warten. Zudem ist lediglich ein einfaches und kostengünstiges Gehäuse für die Pump- und Umwandlungseinrichtung, also ohne aufwendigen Druck- bzw. Tauchbehälter, erforderlich.

In einer erfindungsgemäßen Weiterbildung sind die Pump- und Umwandlungseinrichtung zu einer Einheit zusammengefasst, so dass die Umwandlungseinrichtung, die bei der Einspeicherung des Wassers in die Speicherkammer von dem einströmenden Wasser angetrieben wird, bei der Ausspeicherung des Wasser aus der Speicherkammer als Antrieb der Pumpeinrichtung genutzt werden kann. Die Pumpeinrichtung ist vorzugsweise als eine Pumpe mit Motor, die Umwandlungseinrichtung als eine Turbine mit Generator aufgebaut, wobei der Generator bevorzugt auch als Motor für die Pumpe eingesetzt werden kann.

Die Pump- und Umwandlungseinrichtung ist vorzugsweise an zumindest einer

Schiene oder zumindest einem Schwenkarm an der Speicherkammer gelagert. Die Schiene oder der Schwenkarm ermöglichen eine Bewegung der Pump- und Umwandlungseinrichtung relativ zur Speicherkammer. Die zumindest eine Schiene ist beispielsweise als eine Wandschiene aufgebaut und an einer Seitenwand der Speicherkammer vertikal angeordnet, wobei an der Schiene zumindest ein Rad mit einer Aufhängungsvorrichtung beweglich angeordnet bzw. eingehakt ist und das Rad über die Aufhängungsvorrichtung mit der Pump- und Umwandlungseinrichtung verbunden ist. Die Aufhängungsvorrichtung ist vorzugsweise als ein an der Pump- und Umwandlungseinrichtung angeordneter und von dieser abstehender Balken oder Schwenkarm aufgebaut, an dessen freien Ende das Rad gelagert ist. In einer anderen Ausgestaltung ist der Schwenkarm ohne Aufhängungsvorrichtung und Rad sowohl an der Pump- und Umwandlungseinrichtung als auch an der Speicherkammer schwenkbar und zwängungsfrei gelagert.

Die Speicherkammer ist vorzugsweise als ein Betonbauteil mit einem im Wesentlichen zylindrischen Querschnitt ausgebildet. Es wird so insbesondere eine ausreichende Stabilität der Speicherkammer ermöglicht. Zudem ist eine Betonbauweise der Speicherkammer für deren Herstellung, Montage, Transport und Dichtigkeit vorteilhaft. Beton als Umhüllung der zur Stabilität notwendigen Eisen- oder Stahlbauteile stellt insbesondere einen geeigneter Schutz gegen Korrosion dar. Der bevorzugt zylindrische Querschnitt der Speicherkammer erhöht deren Stabilität insbesondere aufgrund des an der Speicherkammer anliegenden hohen Aussendrucks.

In einer Ausführungsform der Erfindung weist die Speicherkammer eine obere Öffnung und einen nach innen geneigten, oberen Rand der Seitenwände auf. Die Speicherkammer ist bevorzugt in Form eines großen Topfes aufgebaut, wobei lediglich die unteren und seitlichen Wände die Speicherkammer von der Umgebung abdichten. Die obere Öffnung ist beispielsweise als Einstiegsluke für Wartungen oder Montagen verwendbar. Die Öffnung ist vorzugsweise mit einer Plane verschließbar, so dass ein ungewollter Eintritt von Wasser, beispielsweise bei Regen oder hohem Wellengang, in die Speicherkammer verhindert wird. Die seitlich am oberen Rand, also an dem oberhalb der Wasserlinie angeordneten Teil der Wände, nach innen geneigten Wände der Speicherkammer sind insbesondere vorteilhaft für eine verbesserte Aerodynamik bzw. Windleitfähigkeit am oberen Teil der Speicherkammer. Dadurch wird insbesondere bei Sturm wesentlich zur Stabilität der Speicherkammer beigetragen.

In einer weiteren Ausgestaltung der Erfindung weist die Speicherkammer an einer Außenwand zumindest unterhalb der Wasserlinie ein oder mehrere nach außen abstehende Wandelemente jeweils in Form eines Ruders oder einer Finne auf. Die Wandelemente ermöglichen eine zusätzliche Reibwirkung der Speicherkammer innerhalb des Wassers und stabilisieren die Speicherkammer. Es wird beispielsweise verhindert, dass die Speicherkammer aufgrund des Windes um die eigene Achse gedreht oder bewegt wird, da die Reibung innerhalb des Wassers der Drehbewegung der Speicherkammer entgegen wirkt.

Die Speicherkammer ist bevorzugt von zumindest einer Haltevorrichtung in einem Reservoir des Speichermediums, insbesondere einem Meer, höhenverlagerbar, also absinkbar aus geringen Wassertiefen in große Wassertiefen und umgekehrt, festgelegt. Die Haltevorrichtung ermöglicht, dass die Speicherkammer zum einen an einer Position oder einem Ort zumindest entgegen einer Bewegung in horizontaler Richtung festgelegt ist, zum anderen die Speicherkammer aber zumindest in vertikaler Richtung zum Absinken oder Aufschwimmen bewegbar gelagert ist. Die Haltevorrichtung ist vorzugsweise als ein Anker aufgebaut, der eine Spanneinrichtung aufweist, mittels derer eine zwischen Anker und Speicherkammer angeordnete Kette oder ein Seil vor- oder entspannt werden kann.

In einer Weiterbildung der Erfindung ist es vorgesehen, dass die Speicherkammer eine Anlage zur Erzeugung elektrischer Energie und/oder zum Antreiben der Pumpeinrichtung aus erneuerbaren Energien aufweist. Dadurch ist es ermöglicht, dass die zur Ausspeicherung des Speichermediums benötigte elektrische Energie unmittelbar vor Ort aus erneuerbaren Energien gewonnen werden kann. Die Anlage ist beispielsweise an der Speicherkammer an einem oberhalb des Wasserspiegels befindlichen Teil angeordnet und als eine Windkraftanlage aufgebaut. Weitere Beispiele der Anlage können eine Photovoltaikanlage oder auch ein Strömungskraftwerk unterhalb der Wasseroberfläche sein.

Die erfindungsgemäße Vorrichtung eines Pumpspeicherkraftwerks mit einer Pumpeinrichtung, die ein Speichermedium auf ein Niveau höherer potentieller Energie fördert, einer Umwandlungseinrichtung, die potentielle Energie des Speichermediums in elektrische Energie umwandelt, und einer Speicherkammer zum Einspeichern und Ausspeichern des Speichermediums, wobei die Speicherkammer schwimmfähig ausgebildet ist und die Umwandlungseinrichtung beim Einspeichern des Speichermediums in die Speicherkammer elektrische Energie erzeugt, sieht vor, dass der Boden der Speicherkammer unter Ausbildung eines Freiraumes kalottenartig gewölbt ausgebildet ist.

Es ist erfindungsgemäß vorgesehen, dass das Pumpspeicherkraftwerk vollständig auf dem offenen Meer betrieben werden kann und dass als Speichermedium insbesondere Wasser verwendet wird. Die Ein- und Ausspeicherung des Wassers erfolgt zwischen zwei Reservoirs, nämlich der Speicherkammer und dem Meer, wobei der Wasserspiegel innerhalb der Speicherkammer dauerhaft unterhalb dem des Meeresspiegels liegt. Mittels der Pumpeinrichtung wird das Wasser zur Ausspeicherung von einem Niveau niedriger potentieller Energie, also aus der Speicherkammer, auf ein Niveau höherer potentieller Energie, also in das Meer, gepumpt. Während der Ausspeicherung des Wassers verringert sich das Gewicht der Speicherkammer, so dass die Speicherkammer im Meerwasser erfindungsgemäß Auftrieb erhält. Dadurch schwimmt die Speicherkammer bei Ausspeicherung auf. Bei der Einspeicherung bzw. Einströmen des Wassers aus dem Meer in die Speicherkammer wird von dem einströmenden Wasser eine Umwandlungseinrichtung angetrieben, die die potentielle bzw. kinetische Energie des Wassers in elektrische Energie umwandelt. Aufgrund des steigenden Gewichtes der Speicherkammer sinkt die Speicherkammer ab, so dass aufgrund des einströmenden Wassers der ursprüngliche Höhenunterschied aufgrund des anfänglichen Tiefganges der Speicherkammer erhalten bleibt. Durch den relativ geringen Höhenunterschied zwischen dem Meeresspiegel und dem Wasserniveau in der Speicherkammer wirken nur relativ geringe Druckkräfte auf die Wandung der Speicherkammer, so dass diese relativ dünn ausgeführt werden können. Alternativ kann das Pumpspeicherwerk auch auf einem anderen Gewässer betrieben werden, das ausreichend groß und tief ist. Das erfindungsgemäße Pumpspeicherkraftwerk ermöglicht somit die Speicherung elektrischer Energie ohne Platzbedarf oder landschaftliche Beeinträchtigungen auf dem Festland.

Es ist erfindungsgemäß vorgesehen, dass die Speicherkammer vorzugsweise einen kalottenartig gewölbten Boden aufweist. Dieser Boden kann als Zugkalotte oder als Druckkalotte ausgebildet sein. Neben konstruktiven Vorteilen, wird hiermit die Ausbildung eines Freiraumes unterhalb des kalottenartig gewölbten Bodens der Speicherkammer ermöglicht. Es ist möglich, in diesen Freiraum Luft einzupumpen, um der Speicherkammer beispielsweise beim Aufschwimmen eine größere Auftriebskraft bereitzustellen, grundsätzlich ist jedoch der Auftrieb ohne Druckluftunterstützung ausreichend, um ein Aufschwimmen zu erreichen. Zudem kann die Speicherkammer mittels der größeren Auftriebskraft für ein vollständiges Aufschwimmen in eine Lage versetzt werden, in der die Speicherkammer einen minimalen Tiefgang aufweist. Dadurch ist es möglich, die Speicherkammer beispielsweise zur Montage, Wartung oder aus anderen Gründen in relativ einfacher Weise in ein Trockendock zu bewegen. Bei der Einspeicherung des Speichermediums und dem zeitgleichen Absinken der Speicherkammer kann die Luft in dem Freiraum gehalten werden oder kontrolliert und vorzugsweise unter Energieumwandlung abströmen.

Eine Ausgestaltung der Erfindung sieht vor, dass die Pump- und Umwandlungseinrichtung an der Speicherkammer höhenverlagerbar befestigt sind und zumindest über zumindest ein teleskopierbares Rohr mit einer im Bereich des Bodens der Speicherkammer angeordneten Einlassöffnung gekoppelt sind. Das teleskopierbare Rohr weist erfindungsgemäß mehrere Rohrabschnitte auf, die es ermöglichen, die Rohrverbindung zwischen der Pump- und Umwandlungseinrichtung und der Speicherkammer in einem begrenzten Maße zu verlängern bzw. zu verkürzen. An dem teleskopierbaren Rohr ist zumindest im Bereich des Bodens der Speicherkammer ein Gelenk angeordnet, so dass das Rohr zumindest gegenüber der Speicherkammer schwenkbar gelagert ist. Vorzugsweise ist ein zweites Gelenk an dem Rohr im Bereich der Pump- und Umwandlungseinrichtung angeordnet, so dass das Rohr auch gegenüber der Pump- und Umwandlungseinrichtung schwenkbar gelagert sein kann. Somit kann die Pump- und Umwandlungseinrichtung schwenkbar, vorzugsweise zwängungsfrei, sowie höhenverlagerbar an der Speicherkammer gelagert sein. Neben der Ausgestaltung mit einem Rohr können auch mehrere parallel angeordnete Rohre vorgesehen sein, die die Pump- und Umwandlungseinrichtung mit der Speicherkammer verbinden, um die Abmessungen der einzelnen Rohre zu verringern und die Handhabbarkeit zu verbessern.

Beim Absinken der Speicherkammer ist erfindungsgemäß vorgesehen, dass das telekopierbare Rohr mittels der einzelnen Rohrabschnitte verlängert wird, so dass die Speicherkammer absinken und die Pump- und Umwandlungseinrichtung an der Wasseroberfläche verbleiben kann. Beim Aufschwimmen der Speicherkammer erfährt das teleskopierbare Rohr erfindungsgemäß eine Verkürzung, so dass die Pump- und Umwandlungseinrichtung über das Verbindungsrohr von der aufschwimmenden Speicherkammer nicht in die Höhe bzw. in die Ferne gedrückt wird sondern an der Wasseroberfläche im Bereich der Speicherkammer angeordnet sein kann.

Die Rohrabschnitte des teleskopierbaren Rohrs weisen vorzugsweise Dichtungen auf, die es ermöglichen, dass auch bei hohem Innen- bzw. Außendruck kein Wasseraustausch zwischen Rohrinnenraum und der Umgebung stattfindet. Dies ist insbesondere im Hinblick auf einen hohen Wirkungsgrad des Pumpspeicherkraftwerkes vorteilhaft.

Die Rohrabschnitte des teleskopierbaren Rohrs sind vorzugsweise über eine Fangeinrichtung in ihrer Relativbewegung zueinander begrenzt. Dadurch ist eine Sicherung gegen ein Herausgleiten oder Herausrutschen eines ersten Rohrabschnittes aus einem zweiten Rohrabschnitt ermöglicht. Die Fangeinrichtung ist beispielsweise als ein Prellbock, ein Fangseil oder eine andere Ausgestaltung aufgebaut und vorzugsweise an der Rohraußenseite angeordnet.

In einer Ausgestaltung der Erfindung weist das teleskopierbare Rohr zumindest einen Auftriebskörper auf, der dazu geeignet ist, dem Rohr im Wasser Auftrieb bereitzustellen. Der Auftriebskörper kann als ein Teilauftriebskörper jeweils an den einzelnen Rohrabschnitten angeordnet sein. Der Auftriebskörper bzw. der Teilauftriebskörper ist vorzugsweise derart ausgebildet, dass die Auftriebskraft der Gewichtskraft des Rohrs bzw. des entsprechenden Rohrabschnittes entspricht. Dadurch erfährt das Rohr bzw. die Rohrabschnitte im Wasser eine Art Schwebezustand. Der Auftriebskörper ist vorzugsweise als ein Hartschaum an der Außenwand des Rohrs bzw. der Rohrabschnitte ausgebildet.

Die Rohrabschnitte weisen vorzugsweise eine Beschichtung aus Kunststoff und/oder Edelstahl mit einer sehr glatten Oberfläche auf. Die Beschichtung ist insbesondere in dem Bereich der Rohrabschnitte ausgebildet, in denen zwei Rohrabschnitte bewegbar übereinander gelagert sind. In diesem Bereich kann eine Dichtung zwischen den zwei Rohrabschnitten angeordnet sein, die bei einer Relativbewegung der Rohrabschnitte zueinander über die glatten Oberflächen gleiten. Somit ist ein leichtgängiges Gleiten der Rohrabschnitte aufeinander ermöglicht. Die Beschichtung ist beispielsweise als ein Edelstahlmantel spiralförmig mit einer Dicke von 1 bis 2 mm auf dem Rohr aufgebracht.

In einer Ausgestaltung der Erfindung ist vorgesehen, dass der Boden über eine in der Speicherkammer angeordnete Stützkonstruktion mit einer Abdeckung gekoppelt ist. Dies hat insbesondere konstruktive Vorteile für eine sichere Abstützung des Daches der Speicherkammer. Die Stützkonstruktion ist vorzugsweise innerhalb einer Wand in der Speicherkammer ausgebildet, die zwischen der Speicherkammer und einem seitlich angeordneten Ausgleichsbehälter ausgebildet ist. Die Stützkonstruktion kann aber auch als freistehende Stütze innerhalb der Speicherkammer ausgebildet sein.

Das erfindungsgemäße Verfahren zum Speichern elektrischer Energie mittels Umwandlung in potentielle Energie, bei dem ein Speichermedium in eine Speicherkammer unter Veränderung der potentiellen Energie des Speichermediums wechselweise ein- oder ausgespeichert wird, sieht vor, dass die Speicherkammer in einem Speichermediumvorrat schwimmend angeordnet ist und bei der Einspeicherung des Speichermediums in die Speicherkammer die Speicherkammer absinkt und potentielle in elektrische Energie umgewandelt und bei der Ausspeicherung des Speichermediums aus der Speicherkammer die Speicherkammer aufschwimmt und elektrische in potentielle Energie umgewandelt wird.

Es ist erfindungsgemäß vorgesehen, dass die Ein- und Ausspeicherung des Speichermediums, insbesondere Wasser, zwischen der Speicherkammer und einem die Speicherkammer umgebenen Speichermediumvorrat, insbesondere ein Meer, erfolgt. Bereits aufgrund des Eigengewichtes der schwimmend gelagerten Speicherkammer weist diese im Meer vorzugsweise einen Tiefgang auf, so dass der innerhalb der Speicherkammer befindliche Wasserspiegel permanent unterhalb des Wasserspiegels des Meeres liegt. Dadurch ist ein Höhenunterschied zwischen den Wasserständen innerhalb und außerhalb der Speicherkammer ausgebildet. Bei der Einspeicherung wird mittels des in die Speicherkammer einströmenden Wassers die potentielle bzw. kinetische Energie des Wassers in elektrische Energie umwandelt. Aufgrund des steigenden Gewichtes der Speicherkammer durch das einströmende Wasser sinkt die Speicherkammer bei Einspeicherung ab. Das Absinken der Speicherkammer ist erfindungsgemäß bis zum Aufsetzen auf dem Meeresgrund möglich, wobei der Wasserspiegel innerhalb der Speicherkammer fortwährend niedriger als der Wasserspiegel außerhalb der Speicherkammer, also des Meeres, liegt. Bei der Ausspeicherung wird Wasser unter Verwendung elektrischer Energie aus der Speicherkammer in das Meer gefördert, so dass das Gewicht der Speicherkammer sinkt und die Speicherkammer Auftrieb erhält und aufschwimmt. Die Ein- und Ausspeicherung des Wassers erfolgen erfindungsgemäß wechselweise nach Bedarf.

Bei der Ein- und/oder Ausspeicherung der Speicherkammer verbleibt die Pump- und Umwandlungseinrichtung erfindungsgemäß dauerhaft an der Oberfläche des Speichermediumsvorrats bzw. des Meeres. Dadurch ist es ermöglicht, die Pump- und Umwandlungseinrichtung an der Oberfläche des Meeres, also ohne jegliche Tauchmanöver, zu installieren, zu betreiben und/oder zu warten. Zudem erlaubt dies eine gegenüber tauchenden Anlagen verbesserte und erhöhte Funktionalität sowie eine einfache und sichere Montage.

Es ist vorgesehen, dass eine Verbindungseinrichtung, beispielsweise eine Kette oder ein Seil, zwischen der Speicherkammer und der Haltevorrichtung angeordnet ist und bei Absinken oder Aufschwimmen der Speicherkammer vorgespannt oder entspannt wird. Die Haltevorrichtung wird dazu vorzugsweise am Grund des Meeres festgelegt und ermöglicht, dass die Speicherkammer trotz Bewegung in vertikaler Richtung, also bei Absinken oder Aufschwimmen, in horizontaler Richtung festgelegt werden kann. Insbesondere ein Abdriften oder Wegschwimmen der Speicherkammer wird somit verhindert. Nach der Einspeicherung weist die Speicherkammer erfindungsgemäß einen hohen Tiefgang auf und ist daher näher am Grund des Meeres angeordnet. Dadurch ist auch die Verbindungseinrichtung zwischen Haltevorrichtung und Speicherkammer verkürzt, so dass die Verbindungseinrichtung vorgespannt wird. Nach der Ausspeicherung weist die Speicherkammer einen niedrigen Tiefgang auf und ist daher weiter vom Meeresgrund entfernt. Dadurch hat sich auch die Verbindung zwischen Haltevorrichtung und Speicherkammer vergrößert, so dass die Verbindungseinrichtung entsprechend entspannt, also nachgegeben, wird.

Die zur Ausspeicherung des Speichermediums aus der Speicherkammer benötigte elektrische Energie wird bevorzugt aus erneuerbaren Energien erhalten. Erneuerbare Energien treten diskontinuierlich auf, so dass auch deren Umwandlung in elektrische Energie ständigen Schwankungen unterliegt. Dies können beispielsweise bei Windkraftanlagen ein wechselnd starker oder schwacher Wind oder bei Photovoltaikanlagen die unterschiedlich starke Intensität der Sonneneinstrahlung sein. Um die Schwankungen der erneuerbaren Energien auszugleichen oder diese mit den aufgrund anderer Gründe auftretenden Schwankungen im elektrischen Stromnetz abzustimmen, ist die Einspeicherung elektrischer Energie bevorzugt aus erneuerbaren Energien vorgesehen. Die Pumpen können auch direkt von einer Windkraftanlage angetrieben werden.

Es ist erfindungsgemäß vorgesehen, dass die Pumpeinrichtung vorzugsweise von der Umwandlungseinrichtung angetrieben wird. Insbesondere bei Ausgestaltung der Pumpeinrichtung als eine Pumpe mit elektrischem Antrieb und der Umwandlungseinrichtung als eine Turbine mit Generator, kann der Generator als Motor der Pumpe verwendet werden. Dies ist insbesondere kostengünstig und platzsparend.

Nachfolgend werden Ausführungsbeispiele der Erfindung anhand der beigefügten Figuren näher erläutert. Es zeigen:
- Figuren 1a bis 1e: einen Aufbau der Speicherkammer;
- Figuren 2a bis 2e: eine schematische Darstellung eines Schwenkarms zur Lagerung der Pump- und Umwandlungseinrichtung an der Speicherkammer;
- Figuren 3a bis 3e: eine schematische Darstellung einer beweglichen Wasserleitung zwischen der Pump- und Umwandlungseinrichtung und der Speicherkammer;
- Figuren 4a und 4b: einen Aufbau einer flexiblen Rohrverbindung;
- Figur 5: eine schematische Darstellung der Anordnung der Speicherkammer und der Haltevorrichtungen;
- Figuren 6a bis 6c: eine schematische Darstellung des Vorgangs der Verankerung sowie einen Aufbau der Haltevorrichtung;
- Figuren 7a und 7b: eine schematische Darstellung der Speicherkammer mit einer Windkraftanlage;
- Figuren 8a und 8b -: einen Aufbau der Speicherkammer;
- Figuren 9a und 9b -: eine schematische Darstellung eines teleskopierbaren Rohrs zur Lagerung der Pump- und Umwandlungseinrichtung an der Speicherkammer;
- Figuren 10a und 10b -: eine schematische Darstellung der Rohrabschnitte des teleskopierbaren Rohrs zwischen der Pump- und Umwandlungseinrichtung und der Speicherkammer; sowie
- Figur 11 -: eine schematische Darstellung eines Trockendocks für die Herstellung und Wartung der Speicherkammer.

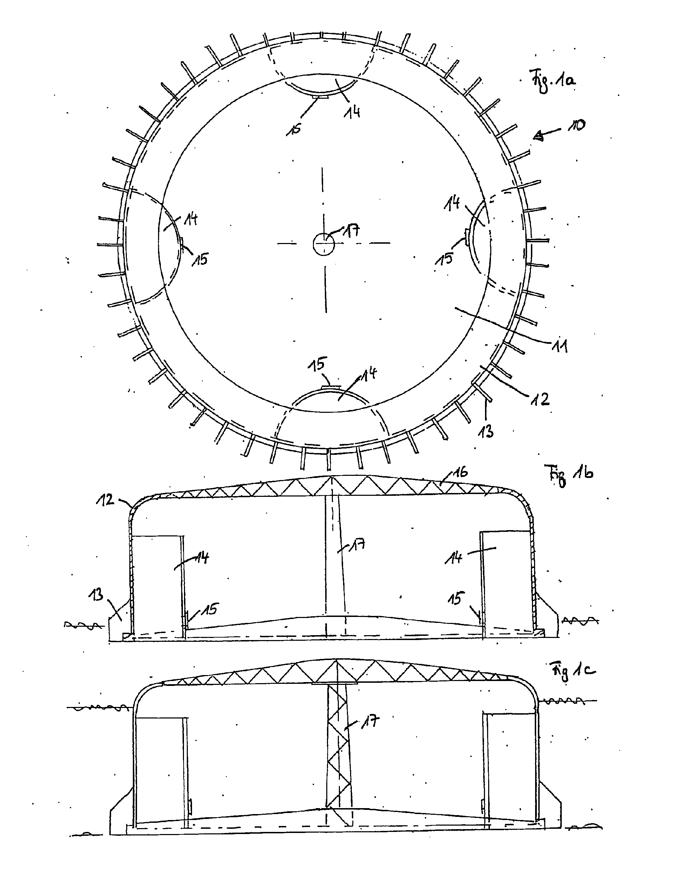

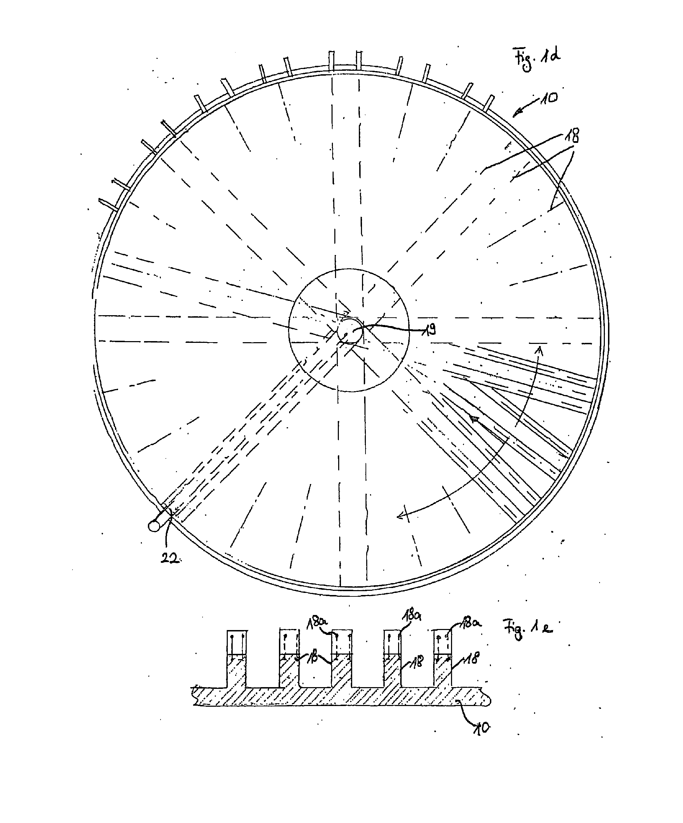

In der Figur 1 a ist schematisch in einer Draufsicht die Speicherkammer 10 gezeigt. Die Speicherkammer 10 weist einen zylindrischen Querschnitt auf, der an einer Stirnseite, der Oberseite der Speicherkammer 10, eine Öffnung 11 aufweist. Innerhalb der Speicherkammer 10 sind Ausgleichskammern 14 angeordnet, die jeweils eine verschließbare Öffnung bzw. ein Ventil 15 mit beispielsweise einem elektrisch betätigten Schieber aufweisen. Über diese Ausgleichskammern 14 ist es möglich, die Speicherkammer 10 zu trimmen und in einer im Wesentlichen geraden Lage auf dem Wasser zu halten, auch wenn nur an einer Stelle Wasser eingeleitet wird oder sich aufgrund von Wellengang oder Wind eine Neigung der Speicherkammer 10 einstellt. Die zylindrische Wand der Speicherkammer 10 weist an ihrem unteren Rand mehrere nach außen abstehende Wandelemente 13 auf, die im Wasser wie Ruder oder Finnen zur Stabilisierung der Lage der Speicherkammer 10 wirken und insbesondere ein Verdrehen der Speicherkammer 10 verhindern.

An dem oberen Ende der zylindrischen Wand weist diese, wie auch in Figuren 1b und 1c erkennbar, einen nach innen geneigten, oberen Rand 12 auf. Der nach innen geneigte, gerundete Rand 12 dient zur weiteren statischen Stabilisierung der Speicherkammer 10, verhindert ein Eindringen von Wasser bei einem hohen Wellengang und leitet die Windströmung über die Speicherkammer 10 hinweg, so dass ein verringerter Luftwiderstand der Speicherkammer 10 erreicht werden kann. Dadurch kann die Speicherkammer 10 mit einem relativ geringen Aufwand an Ort und Stelle gehalten werden.

Die an der Oberseite der Speicherkammer 10 ausgebildete Öffnung 11 kann beispielsweise mittels einer Plane oder einer anderen Dachform 16 geschlossen werden. In der zylindrischen Mitte der Speicherkammer 10 ist eine Stütze 17 zur Stabilisierung der Dachkonstruktion 16 angeordnet. Die Stütze 17 kann ein Voll- oder Hohlprofil aufweisen oder als ein Gerüst aufgebaut sein.

Die Speicherkammer 10 ist insbesondere aus Beton aufgebaut und kann erfindungsgemäß einen Durchmesser von etwa 300 Meter und eine Höhe von etwa 50 Meter aufweisen. An der unteren Stirnseite der Speicherkammer 10, wie in Figur 1d und 1e zu erkennen ist, sind Stege 18 ausgebildet, in denen Spannstähle oder Spannseile 18a zur Stabilitätserhöhung angeordnet sind. Eine Stabilitätserhöhung an der unteren Stirnseite der Speicherkammer 10 ist insbesondere in den Bereichen notwendig, in denen an der Speicherkammer 10 eine Verbindungseinrichtung 31 angeordnet ist, die die Speicherkammer 10 mit einer Haltevorrichtung 30 verbindet, welches später erläutert werden wird.

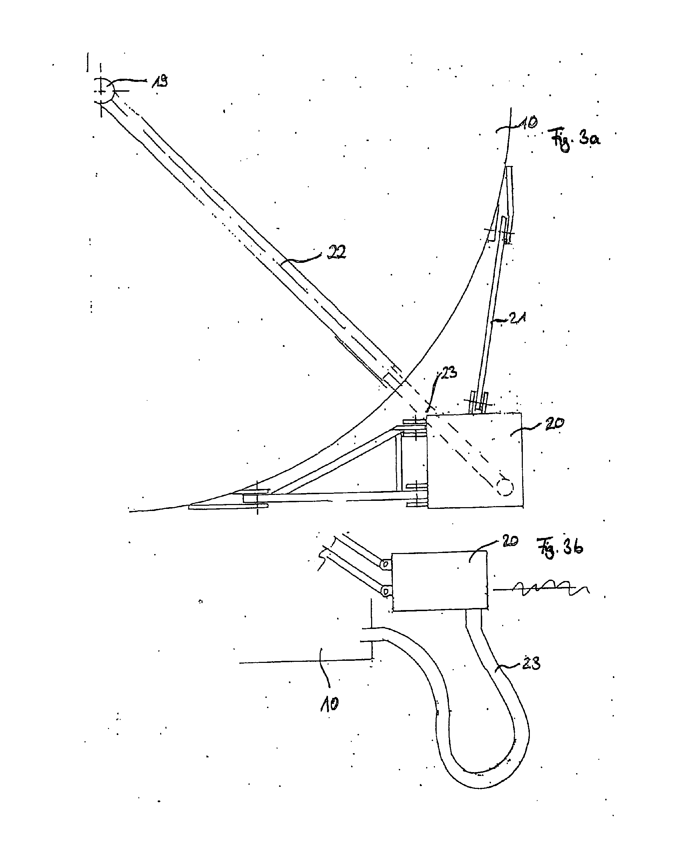

In der Mitte der Unterseite der Speicherkammer 10 ist ein Einlass 19 einer starren Wasserleitung 22 angeordnet. Der Einlass 19 und die starre Wasserleitung 22 sind für die Ein- und Ausspeicherung des Wassers in die und aus der Speicherkammer 10 vorgesehen. Die starre Wasserleitung 22 ist von der Mitte der Unterseite der Speicherkammer 10, also dem Einlass 19, radial nach außen bis an die seitliche bzw. zylindrische Wand der Speicherkammer 10 geführt. Im Bereich der Seitenwand der Speicherkammer 10 ist die starre Wasserleitung 22 mit einer beweglichen Wasserleitung 23 verbunden, die zu der Pump- und Umwandlungseinrichtung 20 geführt ist und in den Figuren 3b bis 3e erläutert wird. Die starre Wasserleitung 22 ist vorzugsweise außerhalb der Speicherkammer 10 angeordnet.

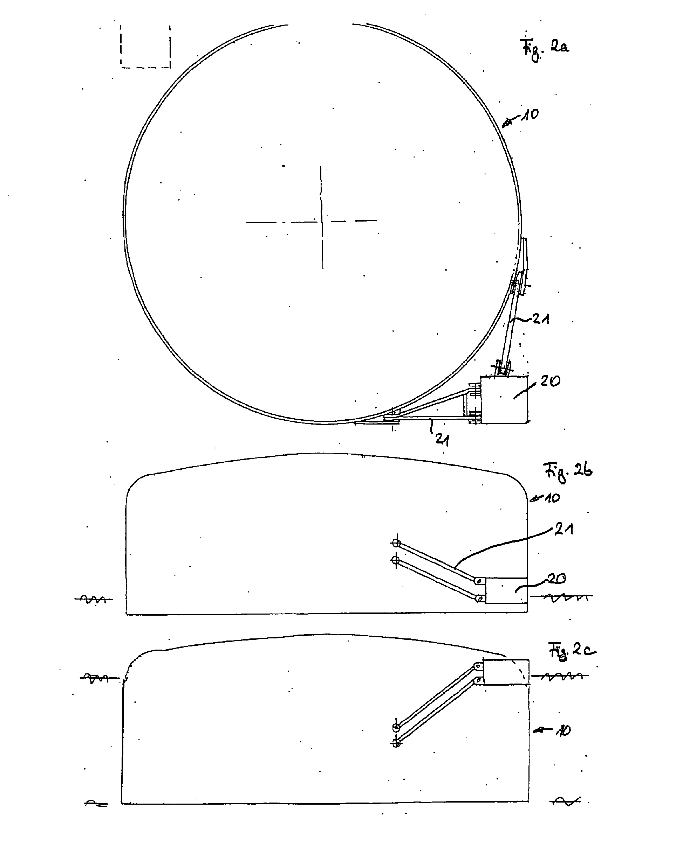

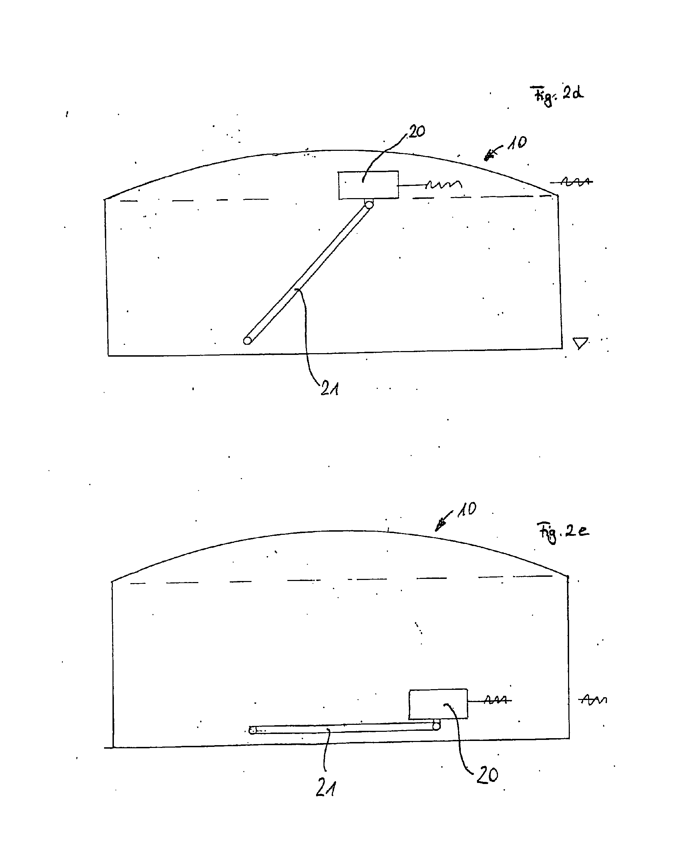

In den Figuren 2a bis 2e ist die an der Speicherkammer 10 schwenkbar befestigte Pump- und Umwandlungseinrichtung 20 schematisch dargestellt. Die Pump- und Umwandlungseinrichtung 20 ist je nach Ausführungsform mit der Speicherkammer 10 mittels zumindest eines Schwenkarms 21 verbunden. Die Schwenkarme 21 sind zwängungsfrei an der Speicherkammer 10 und/oder der Pump- und Umwandlungseinrichtung 20 gelagert, beispielsweise über ein Kugelgelenk. Je nach Ausführungsform ist die Pump- und Umwandlungseinrichtung 20, wie in den Figuren 2a bis 2c dargestellt, außerhalb der Speicherkammer 10 an einem Parallellenker 21 oder, wie in Figuren 2d und 2e gezeigt, an nur einem Schwenkarm 21 gelagert, der gleichzeitig auch die Durchleitung des Wassers in die und aus der Speicherkammer 10 ermöglicht. In den Figuren 2b und 2c sind unterschiedliche Betriebszustände dargestellt, die Figur 2b zeigt die schwimmende Speicherkammer 10 im entleerten Zustand. Lässt man die Speicherkammer 10 volllaufen, wird in der Umwandlungseinrichtung 20 die kinetische Energie des einströmenden Wassers in elektrische Energie umgewandelt. Je mehr Wasser einströmt, desto tiefer sinkt die Speicherkammer 10 ein, bis sie vollständig gefüllt ist, was in der Figur 2c dargestellt ist. Die Speicherkammer 10 kann im gefüllten Zustand auf dem Grund aufliegen, bei einer Verankerung in Gebieten mit einer großen Wassertiefe kann im gefüllten Zustand auch eine schwimmende Verankerung vorgesehen sein.

Insbesondere in der Figur 2e ist zu erkennen, dass aufgrund des anfänglichen Tiefganges der Speicherkammer 10 im entleerten Zustand ein Höhengefälle zwischen dem Wasserspiegel und dem Einlass in die Speicherkammer vorliegt, der zur Umwandlung potentieller Energie in elektrische Energie genutzt wird.

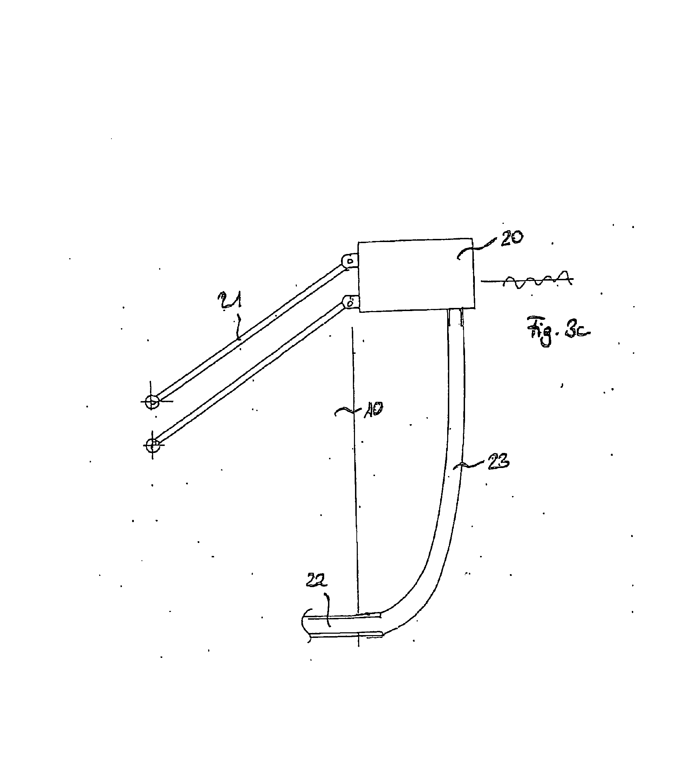

In den Figuren 3a bis 3e sind zwei unterschiedlich aufgebaute Verbindungen bzw. bewegliche Wasserleitungen 23 zwischen der Pump- und Umwandlungseinrichtung und der starren Wasserleitung 22 gezeigt. Die bewegliche Wasserleitung 23 ist seitlich an der Speicherkammer 10 angeordnet, während die starre Wasserleitung 22 unterhalb der Speicherkammer 10 angeordnet ist. Die bewegliche Wasserleitung 23 ist in einer Ausführungsform, wie in den Figuren 3b und 3c dargestellt, als ein Schlauch aufgebaut, der geeignet ist, auch bei hohem Außendruck einen Durchfluss zu gewährleisten. Der Schlauch ist zudem geeignet, je nach Betriebszustand der Pump- und Umwandlungseinrichtung, beispielsweise bei Aufschwimmen der Speicherkammer 10, wie in Figur 3b gezeigt, flexibel gebogen oder verformt zu werden. Der Schlauch weist aufgrund der Höhenverlagerbarkeit der Pump- und Umwandlungseinrichtung 20 gegenüber der Speicherkammer 10 eine ausreichende Länge auf und kann bei Absinken der Speicherkammer 10, wie in Figur 3c dargestellt, gespannt werden.

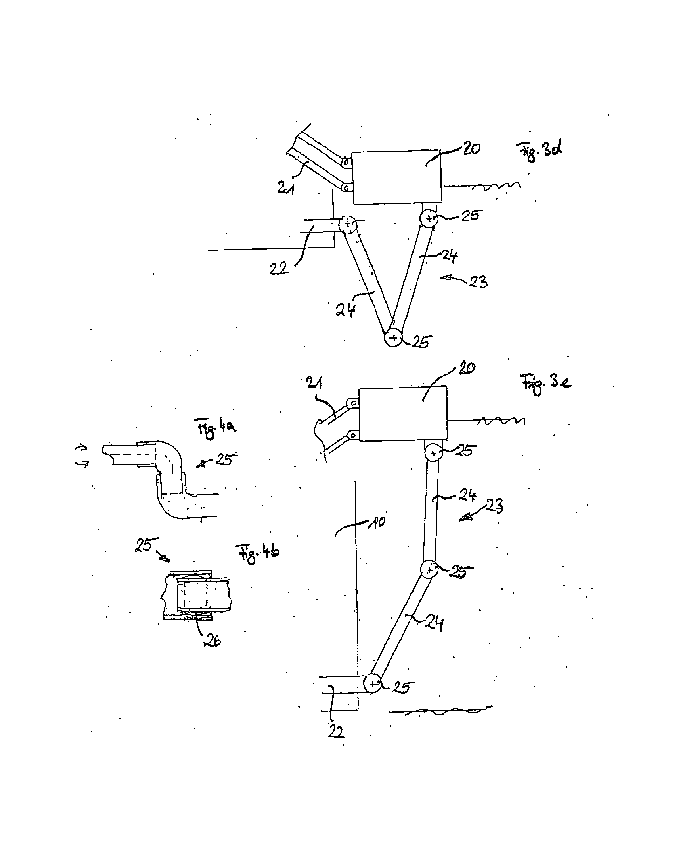

In einer anderen Ausführungsform, wie in den Figuren 3d und 3e dargestellt, ist die bewegliche Wasserleitung 23 als eine Rohrverbindung, bestehend aus mehreren starren Rohrsegmenten 24 und beweglichen Gelenken 25, aufgebaut. Die Gelenke 25 ermöglichen eine Bewegung der starren Rohrsegmente 24 sowie eine zwängungsfreie Lagerung an der Pump- und Umwandlungseinrichtung 20, zwischen den Segmenten 24 sowie im Übergangsbereich zu der starren Wasserleitung 22. Die Ausführungsform als Rohrverbindung ist robuster als die Schlauchverbindung, jedoch auch wartungsintensiver. Unabhängig von der Ausführungsform ist vorgesehen, dass die Wasserleitung (22, 23) einen Durchmesser von etwa 5 bis 6 Meter aufweist, um eine geeignete Durchflussmenge zu ermöglichen.

In den Figuren 4a und 4b ist eine Detaildarstellung des Gelenks 25 gezeigt. Das Gelenk 25 ist als ein gebogener Rohrabschnitt ausgebildet und weist an seinen Enden jeweils eine Öffnung zur Aufnahme eines Endes einer Wasserleitung (22, 23) auf. Im Bereich des Übergangs des Gelenks 25 zu der Wasserleitung (22, 23) sind leicht ballige Übergangsdichtungen 26 innerhalb des Gelenkrohrabschnitts angeordnet. Die Gelenke 25 sind beispielsweise als Durchgangsdrehgelenke aufgebaut.

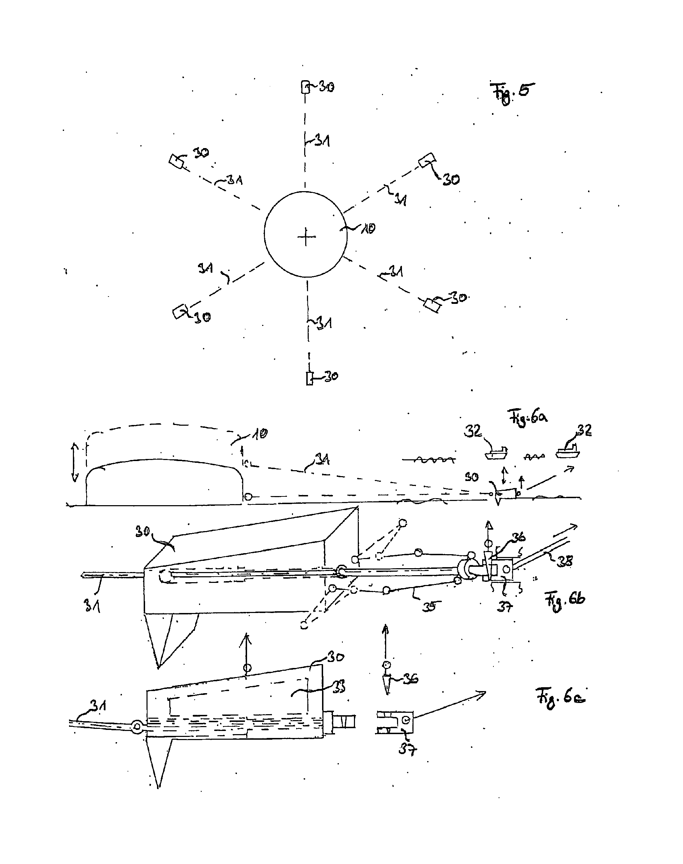

In der Figur 5 ist schematisch die Anordnung der Speicherkammer 10 und der Haltevorrichtungen 30 dargestellt. Die Haltevorrichtungen 30 sind sternförmig um die Speicherkammer 10 angeordnet und mittels einer Verbindungseinrichtung 31, beispielsweise eine Kette oder ein Seil, mit der Speicherkammer 10 verbunden. Die Haltevorrichtung 30 ist dabei am Grund des Meeres festgelegt, wogegen die Speicherkammer 10 im Meerwasser absinken oder aufschwimmen kann.

In der Figur 6a ist gezeigt, wie der Vorgang der Verankerung abläuft. Es sind sowohl die Speicherkammer 10 als auch die Haltevorrichtungen 30 mittels eines oder mehrerer Schiffe 32 zumindest schwimmend transportfähig. In einem ersten Schritt wird zunächst die Speicherkammer 10 schwimmend an eine gewünschte Position bzw. einen Ort transportiert und mittels Einströmen von Wasser vorzugsweise bis zum Meeresgrund abgesenkt. Die Haltevorrichtungen 30 werden in einem zweiten Schritt bei abgesenkter bzw. temporär festgelegter Speicherkammer 10 mittels eines oder mehrere Schiffe 32 derart in Position gebracht, dass eine Verbindungseinrichtung 31 zur Speicherkammer 10 vorgespannt ist. Sodann wird die Haltevorrichtung 30 abgesenkt und beispielsweise am Meeresgrund festgelegt. In einem dritten Schritt, wie in den Figuren 6b und 6c dargestellt, wird die Verbindungseinrichtung 31 entspannt, so dass bei einer anschließenden Ausspeicherung des Wassers aus der Speicherkammer 10 ein Aufschwimmen der Speicherkammer 10, also eine Vergrößerung es Abstandes zum Meeresboden, ermöglicht wird.

In den Figuren 6b und 6c sind eine schematische Detaildarstellung der Haltevorrichtung 30 sowie der Vorgang zum Entspannen der Verbindungseinrichtung 31 gezeigt. Die Haltevorrichtung 30 weist eine Spanneinrichtung 35 zum Vor- bzw. Entspannen der Verbindungseinrichtung 31 auf. Das Vor- bzw. Entspannen der Spannvorrichtung 35 erfolgt mittels eines Kopplungsgliedes 37 und einem lösbaren Zapfen 36. Das Kopplungsglied 37 ist dabei zum einen über ein Seil oder eine Kette 38 mit einem Schiff 32 verbunden und zum anderen über den Zapfen 36 lösbar an der Spannvorrichtung 35 der Haltevorrichtung 30 festgelegt. Bei Lösen des Zapfens 36 kann die Spannvorrichtung 35 und die daran anschließende Verbindungseinrichtung 31 entspannt werden. In einer Ausführungsform, wie in Figur 6c dargestellt, weist die Haltevorrichtung 30 einen inneren Hohlraum 33 auf, so dass sie schwimmend an den Ort der Verankerung geschleppt werden kann. Zum Absenken wird der Hohlraum 33 geflutet, so dass die Haltevorrichtung 30 an dem Boden verankert werden kann.

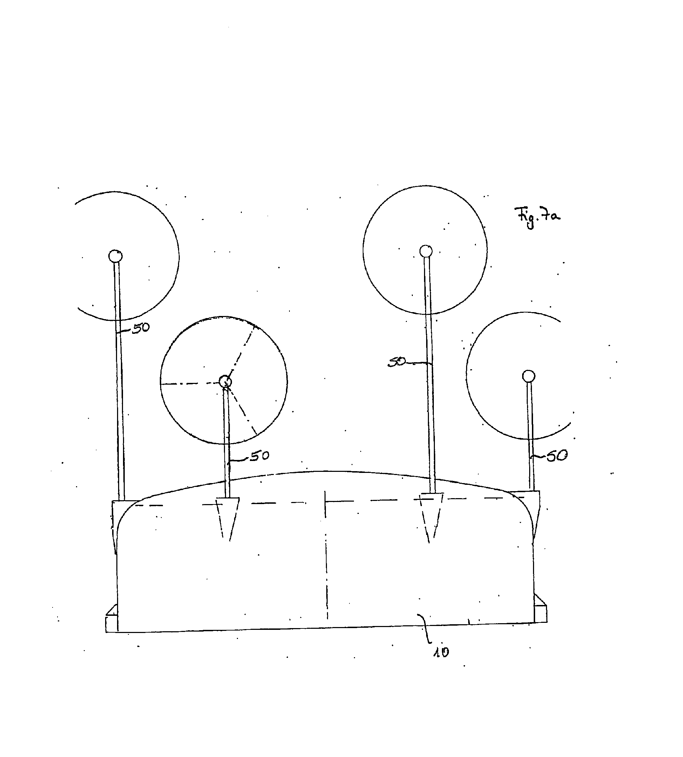

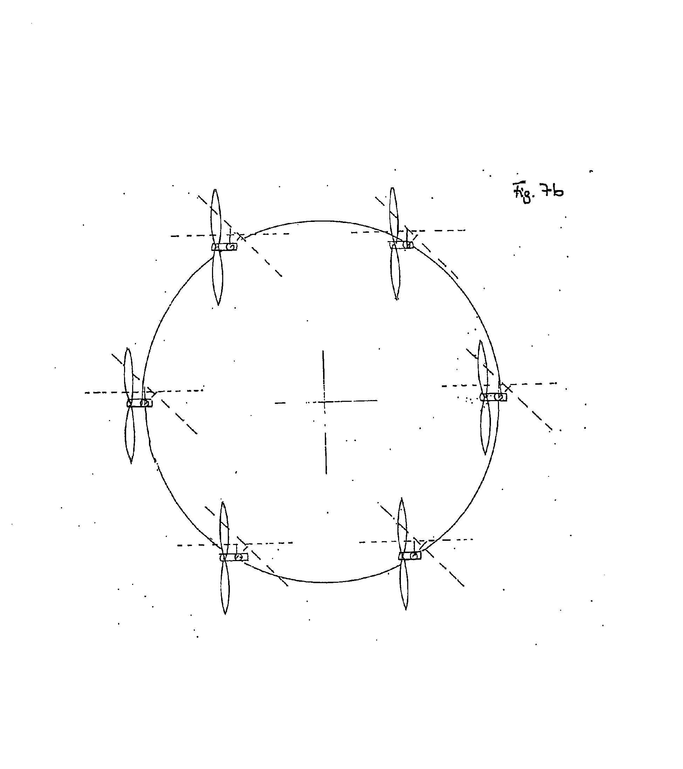

Die Figuren 7a und 7b zeigen als Beispiel eine an der Speicherkammer angeordnete Windkraftanlage mit Windkrafttürmen 50 zur Umwandlung erneuerbarer Energie in elektrische Energie. Die Windkrafttürme 50 sind dabei an der Oberseite, an den Seitenwänden oder auf der Fundamentplatte der Speicherkammer 10 angeordnet und weisen unterschiedliche Höhen auf. Alternativ oder ergänzend zu den Windkrafttürmen 50 kann auch eine Photovoltaikanlage auf dem Dach der Speicherkammer 10 angeordnet sein.

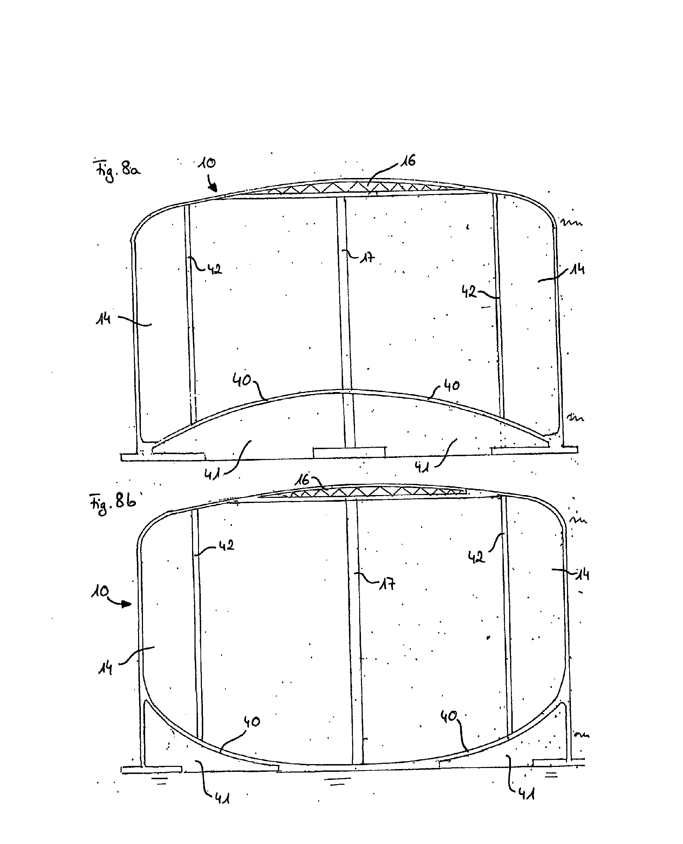

In den Figuren 8a und 8b ist jeweils in einer Seitenansicht die Speicherkammer 10 schematisch dargestellt. Die Speicherkammer 10 weist einen zylindrischen Querschnitt auf und ist an einer oberen Stirnseite mittels einer Dachkonstruktion 16 und an einer unteren Stirnseite mittels einer Bodenkonstruktion 40 abgeschlossen. Die Speicherkammer 10 weist zwischen dem Dach 16 und dem Boden 40 in einem seitlichen Bereich mehrere Stützen 42 auf. Die Stützen 42 sind in dieser Ausgestaltung der Erfindung im Bereich der Ausgleichskammer 14 angeordnet. Die Stütze 42 ist Teil einer Tragkonstruktion für die Dachabdeckung 16. Zudem wird die Dachkonstruktion 16 von der in der Mitte der Speicherkammer 10 angeordneten Stütze 17 getragen, die ebenfalls zwischen dem Dach 16 und dem Boden 40 ausgebildet ist.

Der Boden 40 ist in dieser Ausgestaltung der Erfindung kalottenartig gewölbt aufgebaut und entweder, wie in Figur 8a gezeigt, als Zugkalotte in Richtung auf die Speicherkammer 10 gewölbt oder, wie in Figur 8b dargestellt, als Druckkalotte in Richtung von der Speicherkammer 10 weg gewölbt. Unterhalb des gewölbten Bodens 40 ist ein Freiraum 41 ausgebildet, der je nach Wölbung des Bodens 40 eine größte Höhe in der Mitte der Speicherkammer 10, wie in Figur 8a, oder im Außenbereich der Speicherkammer 10, wie in Figur 8b, aufweist. Der Freiraum 41 ist geeignet, um Luft aufzunehmen. Durch ein Ein- und Auspumpen von Luft in den oder aus dem Freiraum 41 kann die Auftriebskraft der Speicherkammer 10 vorteilhaft beeinflusst werden.

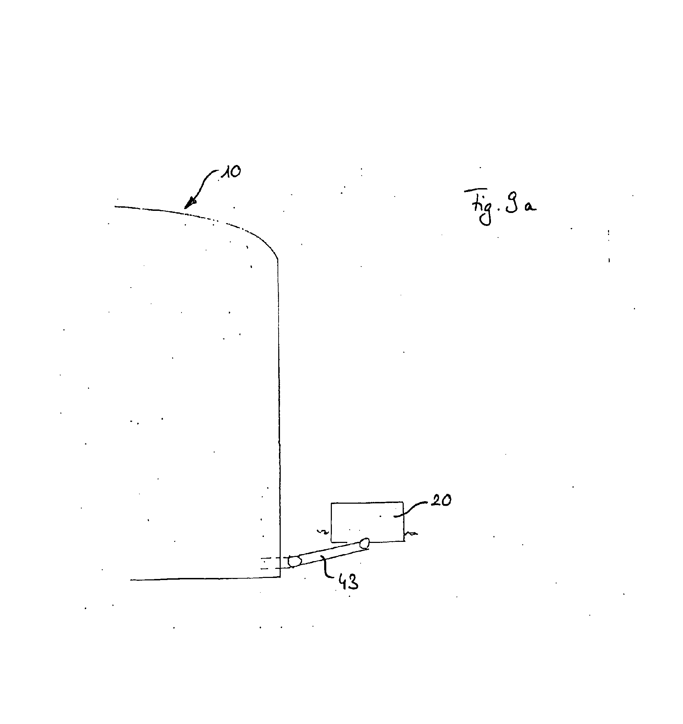

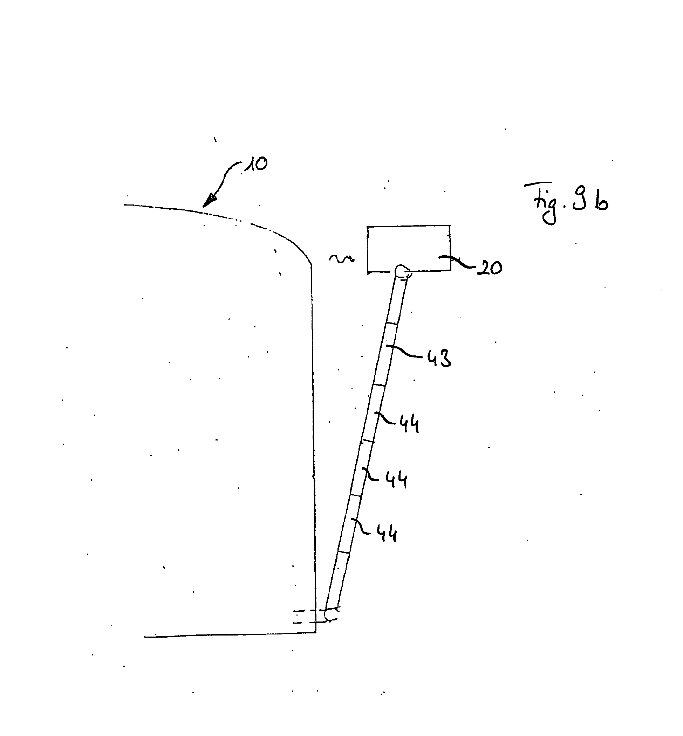

In den Figuren 9a und 9b ist das zwischen der Speicherkammer 10 und der Pump- und Umwandlungseinrichtung 20 angeordnete teleskopierbare Rohr 43 dargestellt. Je nach Lage oder Bewegung der Speicherkammer 10 weist das teleskopierbare Rohr 43 eine geringere oder größere Länge auf. Ausschlaggebend für die Länge des Rohrs 43 ist der Abstand des Bodens 40 der Speicherkammer 10 zu der an der Wasseroberfläche schwimmenden Pump- und Umwandlungseinrichtung 20. Beim Absinken der Speicherkammer 10 vergrößert sich der Abstand zwischen dem Boden 40 der Speicherkammer 10 und der an der Wasseroberfläche schwimmenden Pump- und Umwandlungseinrichtung 20. Mittels der Gewichtskraft der absinkenden Speicherkammer 10 und der entgegenwirkenden Auftriebskraft der Pump- und Umwandlungseinrichtung 20 liegen an dem teleskopierbaren Rohr 43 voneinander entgegen gerichtete Axialkräfte an, so dass das Rohr 43 mittels der ausfahrbaren Rohrabschnitte 44 verlängert wird. Beim Aufschwimmen der Speicherkammer 10 verringert sich der Abstand zwischen dem unteren Bereich der Speicherkammer 10 und der an der Wasseroberfläche angeordneten Pump- und Umwandlungseinrichtung 20, so dass am Rohr 43 aufeinander gerichteten Axialkräfte anliegen. Dies bewirkt ein Ineinanderschieben oder -gleiten der Rohrabschnitte 44 und somit eine Verkürzung des Rohrs 43.

Die Figur 9a zeigt die Speicherkammer 10 in einer Lage schwimmend an der Wasseroberfläche. Die Pump- und Umwandlungseinrichtung 20 ist ebenfalls schwimmend an der Wasseroberfläche, im unteren Bereich der Speicherkammer 10 angeordnet. Das teleskopierbare Rohr 43 weist in diesem Zustand eine geringe Länge auf, wodurch die Pump- und Umwandlungseinrichtung 20 in relativer Nähe der Speicherkammer 10 gelagert ist. Das teleskopierbare Rohr 43 ist mit dem einen Ende über ein Gelenk an der Unterseite der Pump- und Umwandlungseinrichtung 20 und mit dem anderen Ende über ein Gelenk an einer Einlassöffnung im Bodenbereich der Speicherkammer 10 festgelegt.

Die Figur 9b zeigt die in eine große Wassertiefe abgesunkene Speicherkammer 10. Die Speicherkammer 10 weist in dieser Lage einen großen Tiefgang auf. Die Pump- und Umwandlungseinrichtung 20 befindet sich dagegen weiterhin schwimmend an der Wasseroberfläche, nunmehr aber im oberen Bereich der Speicherkammer 10. Das teleskopierbare Rohr 43 ist in diesem Zustand mittels der Rohrabschnitte 44 in axialer Richtung ausgefahren und weist eine große Längenausbildung auf. Dadurch ist der größer gewordene Abstand zwischen Bodenbereich der Speicherkammer 10 und der Wasseroberfläche mittels des verlängerbaren Rohrs 43 überbrückt, ohne dass die Pump- und Umwandlungseinrichtung 20 von der absinkenden Speicherkammer 10 mit in die Tiefe gezogen ist. Dadurch ist ermöglicht, dass die Pump- und Umwandlungseinrichtung 20 fortdauernd schwimmend an der Wasseroberfläche gelagert werden kann. Das teleskopierbare Rohr 43 ist auch in dieser Lage mit dem einen Ende über ein Gelenk mit der Pump- und Umwandlungseinrichtung 20 und mit dem anderen Ende über ein Gelenk mit einer Einlassöffnung im Bodenbereich der Speicherkammer 10 verbunden.

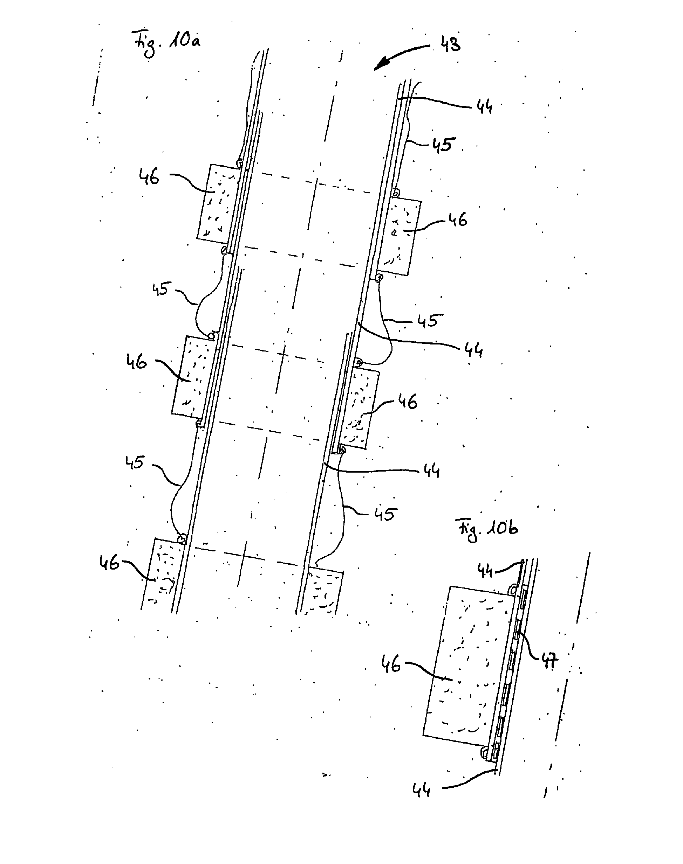

In der Figur 10a ist das teleskopierbare Rohr 43 in einer Detailansicht schematisch dargestellt. Das Rohr 43 weist mehrere Rohrabschnitte 44 auf, die jeweils zueinander relativ bewegbar sind. In dieser Ausgestaltung der Erfindung greifen die Rohrabschnitte 44 ineinander und sind über Fangeinrichtungen 45 gegen ein Herausgleiten oder Herausrutschen gesichert. Die Fangeinrichtungen 45, z.B. Drahtseile oder dergleichen, sind außen an den Rohrabschnitten 44 angeordnet und verbinden jeweils zwei zueinander benachbarte Rohrabschnitte 44. Jeder Rohrabschnitt 44 weist einen Auftriebskörper 46 auf, der jeweils an der Außenseite eines Rohrabschnittes 44 angeordnet ist. Der Auftriebskörper 46 kann beispielsweise als ein Hartschaummantel aufgebaut sein. Dadurch ist es möglich, dass die Rohrabschnitte 44 bzw. das gesamte teleskopierbare Rohr 43 mittels der Auftriebskörper 46 selbständig in einem nahezu ausgeglichenen Schwebezustand im Wasser getragen werden.

In der Figur 10b ist eine zwischen zwei Rohrabschnitten 44 angeordnete Dichtung 47 schematisch dargestellt. Die Dichtung 47 ist in einem Bereich ausgebildet, in dem zwei Rohrabschnitte 44 überlagert angeordnet sind. Dadurch wird verhindert, dass auch bei hohem Druck Wasser aus dem Rohrinneren in die Umgebung oder umgekehrt gelangt. In der Dichtung sind Kanäle eingearbeitet, die mit der Umgebung in Verbindung stehen und die Dichtung an die Außenwand des Innenrohrs und die Innenwand des Außenrohrs pressen.

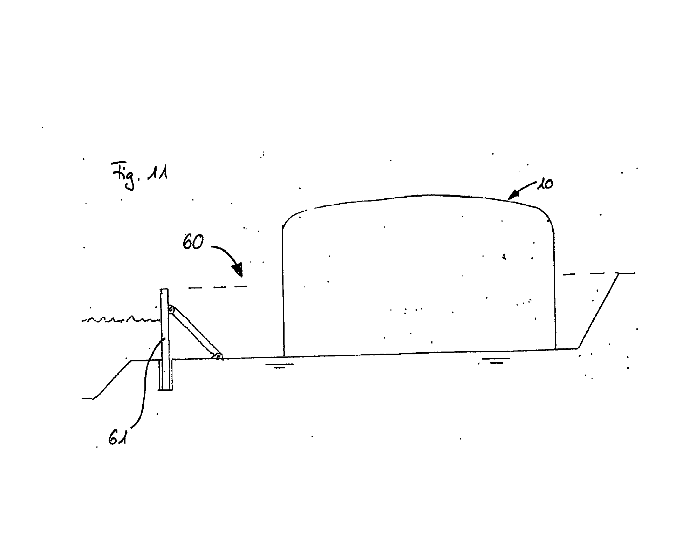

In der Figur 11 ist schematisch ein Trockendock 60 dargestellt, in dem die Speicherkammer 10 aufgenommen ist. Es ist vorgesehen, die Speicherkammer 10 an einer Seite des Trockendocks 60 einzuführen und sodann das Dock 60 mittels einer Sperrvorrichtung 61 gegenüber dem Umgebungswasser abzuschotten. Das Trockendock 60 kann beispielsweise zur Produktion, Montage oder zu Wartungszecken der Speicherkammer 10 genutzt werden. Die Sperrvorrichtung 61 kann als Spannwand, Einsteckplatten oder Klappen mit oder ohne Gelenk aufgebaut sein. Der Boden des Trockendocks 60 liegt vorzugsweise mehrere Meter, z.B. fünf Meter unterhalb der umgebenen Wasseroberfläche. Es ist somit möglich, die gesamte Speicherkammer 10 oder zumindest den unteren Teil der Speicherkammer 10 in dem Trockendock 60 zu fertigen. Nach Fertigstellung beispielsweise des unteren Teils der Speicherkammer 10 kann dieser selbstschwimmend aus dem Trockendock 60 ausgeschifft werden und außerhalb des Trockendocks 60 im oberen Bereich der Speicherkammer 10 zu Ende gefertigt bzw. montiert werden. Dabei kann beispielsweise die obere Außenwand der Speicherkammer 10 während eines Drehvorgangs der gesamten Speicherkammer 10 von einer Kaimauer aus kontinuierlich gefertigt werden.

Die Sperrvorrichtung 61 ist bei der Erstellung der Speicherkammer die bestimmende Größe und der Engpass, durch die die fertiggestellte oder zumindest teilweise fertiggestellte Speicherkammer 10 hindurchgeschleppt werden muss. Je größer die Sperrvorrichtung 61 ist, desto größer kann die Speicherkammer 10 ausgebildet sein. Je höher die Sperrvorrichtung ist, desto höher kann die Speicherkammer 10 errichtet werden, bevor sie zu Wasser gelassen bzw. bevor das Trockendock geflutet wird, so dass die Speicherkammer aufschwimmt und herausgeschleppt werden kann.

Alternativ zu einer klappbaren Sperrvorrichtung 61 kann ein Hohlkasten, z.B. ein Hohlkasten mit einem dreieckigen Querschnitt, vor das Trockendock 60 schwimmend geschleppt werden. Vor der Öffnung des Trockendocks 60 wird dann der Hohlkasten geflutet, z.B. mit dem Wasser aus dem Trockendock 60. Soll die Speicherkammer 10 zur weiteren Fertigstellung an der Kaimauer herausgeschleppt werden, wird das Trockendock geflutet, der Hohlkasten leer gepumpt und mit Luft befüllt und weggeschleppt. Der Hohlkasten ist vorzugsweise aus Beton gefertigt.

De-KS/ih

## Patentansprüche

1. Pumpspeicherkraftwerk mit einer Pumpeinrichtung (20), die ein Speichermedium auf ein Niveau höherer potentieller Energie fördert, einer Umwandlungseinrichtung (20), die potentielle Energie des Speichermediums in elektrische Energie umwandelt, und einer Speicherkammer (10) zum Einspeichern und Ausspeichern des Speichermediums, **dadurch gekennzeichnet, dass** die Speicherkammer (10) schwimmfähig ausgebildet ist und die Umwandlungseinrichtung (20) beim Einspeichern des Speichermediums in die Speicherkammer (10) elektrische Energie erzeugt.

2. Pumpspeicherkraftwerk nach Anspruch 1, **dadurch gekennzeichnet, dass** die Pumpeinrichtung (20) und die Umwandlungseinrichtung (20) an der Speicherkammer (10) höhenverlagerbar befestigt sind.

3. Pumpspeicherkraftwerk nach Anspruch 1 oder 2, **dadurch gekennzeichnet, dass** die Pumpeinrichtung (20) und die Umwandlungseinrichtung (20) schwimmbar ausgebildet sind.

4. Pumpspeicherkraftwerk nach einem der voranstehenden Ansprüche, **dadurch gekennzeichnet, dass** die Pumpeinrichtung (20) und/oder die Umwandlungseinrichtung (20) an zumindest einer Schiene oder zumindest einem Schwenkarm (21) an der Speicherkammer (10) gelagert sind.

5. Pumpspeicherkraftwerk nach einem der voranstehenden Ansprüche, **dadurch gekennzeichnet, dass** die Speicherkammer (10) als ein Betonbauteil mit einem im Wesentlichen zylindrischen Querschnitt ausgebildet ist.

6. Pumpspeicherkraftwerk nach einem der voranstehenden Ansprüche, **dadurch gekennzeichnet, dass** die Speicherkammer (10) an einem unteren Rand einer Außenwand zumindest ein nach außen abstehendes Wandelement (13) aufweist, das wie ein Ruder oder eine Finne wirkt.

7. Pumpspeicherkraftwerk nach einem der voranstehenden Ansprüche, **dadurch gekennzeichnet, dass** zumindest eine Haltevorrichtung (30) die Speicherkammer (10) in einem Reservoir des Speichermediums höhenverlagerbar festlegt.

8. Pumpspeicherkraftwerk nach einem der voranstehenden Ansprüche, **dadurch gekennzeichnet, dass** an der Speicherkammer (10) zumindest eine Anlage (50) zur Erzeugung elektrischer Energie und/oder zum Antreiben der Pumpeinrichtung (20) aus erneuerbaren Energien angeordnet ist.

9. Pumpspeicherkraftwerk nach einem der voranstehenden Ansprüche, **dadurch gekennzeichnet, dass** der Boden (40) der Speicherkammer (10) unter Ausbildung eines Freiraumes (41) kalottenartig gewölbt ausgebildet ist.

10. Pumpspeicherkraftwerk nach Anspruch 9, **dadurch gekennzeichnet, dass** die Pumpeinrichtung (20) und die Umwandlungseinrichtung (20) über zumindest ein teleskopierbares Rohr (43) aus mehreren Rohrabschnitten (44) mit einer im Bereich des Bodens (40) der Speicherkammer (10) angeordneten Einlassöffnung gekoppelt sind.

11. Pumpspeicherkraftwerk nach Anspruch 10, **dadurch gekennzeichnet, dass** zumindest zwei Rohrabschnitte (44) über eine Fangeinrichtung (45) in ihrer Relativbewegung zueinander begrenzt sind.

12. Pumpspeicherkraftwerk nach Anspruch 10 oder 11, **dadurch gekennzeichnet, dass** an dem Rohr (43) Auftriebskörper (46) angeordnet sind.

13. Pumpspeicherwerk nach einem der Ansprüche 10 bis 12, **dadurch gekennzeichnet, dass** der Boden (40) über eine in der Speicherkammer (10) befindliche Stützkonstruktion (42) mit einer Abdeckung (16) gekoppelt ist.

14. Verfahren zum Speichern elektrischer Energie mittels Umwandlung in potentielle Energie, bei dem ein Speichermedium in eine Speicherkammer (10) unter Veränderung der potentiellen Energie des Speichermediums wechselweise ein- oder ausgespeichert wird, **dadurch gekennzeichnet, dass** die Speicherkammer (10) in einem Speichermediumvorrat schwimmend angeordnet ist und bei der Einspeicherung des Speichermediums in die Speicherkammer (10) die Speicherkammer (10) absinkt und potentielle in elektrische Energie umgewandelt und bei der Ausspeicherung des Speichermediums aus der Speicherkammer (10) die Speicherkammer (10) aufschwimmt und elektrische in potentielle Energie umgewandelt wird.

15. Verfahren nach Anspruch 14, **dadurch gekennzeichnet, dass** bei Absinken und/oder Aufschwimmen der Speicherkammer (10) eine Verbindung (21) zwischen Speicherkammer (10) und Pump- und Umwandlungseinrichtung (20) bewegt wird und die Pump- und Umwandlungseinrichtung (20) dauerhaft an der Oberfläche des Speichermediumvorrats gehalten wird.

16. Verfahren nach Anspruch 14 oder 15, **dadurch gekennzeichnet, dass** bei Absinken oder Aufschwimmen der Speicherkammer (10) eine Verbindungseinrichtung (31) zwischen der Speicherkammer (10) und der Haltevorrichtung (30) vorgespannt oder entspannt wird.

17. Verfahren nach einem der Ansprüche 14 bis 16, **dadurch gekennzeichnet, dass** bei der Ausspeicherung des Speichermediums aus der Speicherkammer (10) die Pumpeinrichtung (20) von der Umwandlungseinrichtung (20) angetrieben wird.

## Geänderte Patentansprüche

### Geänderte Patentansprüche gemäss Regel 137(2) EPÜ.

**1.** Pumpspeicherkraftwerk mit einer Pumpeinrichtung (20), die ein Speichermedium auf ein Niveau höherer potentieller Energie fördert, einer Umwandlungseinrichtung (20), die potentielle Energie des Speichermediums in elektrische Energie umwandelt, und einer Speicherkammer (10) zum Einspeichern und Ausspeichern des Speichermediums, wobei die Speicherkammer (10) schwimmfähig ausgebildet ist und die Umwandlungseinrichtung (20) beim Einspeichern des Speichermediums in die Speicherkammer (10) elektrische Energie erzeugt, **dadurch gekennzeichnet, dass** die Pumpeinrichtung (20) und die Umwandlungseinrichtung (20) an der Speicherkammer (10) höhenverlagerbar befestigt sind.

**2.** Pumpspeicherkraftwerk nach Anspruch 1, **dadurch gekennzeichnet, dass** die Pumpeinrichtung (20) und die Umwandlungseinrichtung (20) schwimmbar ausgebildet sind.

**3.** Pumpspeicherkraftwerk nach Anspruch 1 oder 2, **dadurch gekennzeichnet, dass** die Pumpeinrichtung (20) und/oder die Umwandlungseinrichtung (20) an zumindest einer Schiene oder zumindest einem Schwenkarm (21) an der Speicherkammer (10) gelagert sind.

**4.** Pumpspeicherkraftwerk nach einem der voranstehenden Ansprüche, **dadurch gekennzeichnet, dass** die Speicherkammer (10) als ein Betonbauteil mit einem im Wesentlichen zylindrischen Querschnitt ausgebildet ist.

**5.** Pumpspeicherkraftwerk nach einem der voranstehenden Ansprüche, **dadurch gekennzeichnet, dass** die Speicherkammer (10) an einem unteren Rand einer Außenwand zumindest ein nach außen abstehendes Wandelement (13) aufweist, das wie ein Ruder oder eine Finne wirkt.

**6.** Pumpspeicherkraftwerk nach einem der voranstehenden Ansprüche, **dadurch gekennzeichnet, dass** zumindest eine Haltevorrichtung (30) die Speicherkammer (10) in einem Reservoir des Speichermediums höhenverlagerbar festlegt.

**7.** Pumpspeicherkraftwerk nach einem der voranstehenden Ansprüche, **dadurch gekennzeichnet, dass** an der Speicherkammer (10) zumindest eine Anlage (50) zur Erzeugung elektrischer Energie und/oder zum Antreiben der Pumpeinrichtung (20) aus erneuerbaren Energien angeordnet ist.

**8.** Pumpspeicherkraftwerk nach einem der voranstehenden Ansprüche, **dadurch gekennzeichnet, dass** der Boden (40) der Speicherkammer (10) unter Ausbildung eines Freiraumes (41) kalottenartig gewölbt ausgebildet ist

**9.** Pumpspeicherkraftwerk nach Anspruch 8, **dadurch gekennzeichnet, dass** die Pumpeinrichtung (20) und die Umwandlungseinrichtung (20) über zumindest ein teleskopierbares Rohr (43) aus mehreren Rohrabschnitten (44) mit einer im Bereich des Bodens (40) der Speicherkammer (10) angeordneten Einlassöffnung gekoppelt sind.

**10.** Pumpspeicherkraftwerk nach Anspruch 9, **dadurch gekennzeichnet, dass** zumindest zwei Rohrabschnitte (44) über eine Fangeinrichtung (45) in ihrer Relativbewegung zueinander begrenzt sind.

**11.** Pumpspeicherkraftwerk nach Anspruch 9 oder 10, **dadurch gekennzeichnet, dass** an dem Rohr (43) Auftriebskörper (46) angeordnet sind.

**12.** Pumpspeicherwerk nach einem der Ansprüche 9 bis 11, **dadurch gekennzeichnet, dass** der Boden (40) über eine in der Speicherkammer (10) befindliche Stützkonstruktion (42) mit einer Abdeckung (16) gekoppelt ist

**13.** Verfahren zum Speichern elektrischer Energie mittels Umwandlung in potentielle Energie, bei dem ein Speichermedium in eine Speicherkammer (10) unter Veränderung der potentiellen Energie des Speichermediums wechselweise ein- oder ausgespeichert wird, wobei die Speicherkammer (10) in einem Speichermediumvorrat schwimmend angeordnet ist, **dadurch gekennzeichnet, dass** bei der Einspeicherung des Speichermediums in die Speicherkammer (10) die Speicherkammer (10) absinkt und potentielle in elektrische Energie umgewandelt und bei der Ausspeicherung des Speichermediums aus der Speicherkammer (10) die Speicherkammer (10) aufschwimmt und elektrische in potentielle Energie umgewandelt wird, wobei bei Absinken und/oder Aufschwimmen der Speicherkammer (10) eine Verbindung (21) zwischen Speicherkammer (10) und Pumpeinrichtung (20) und Umwandlungseinrichtung (20) bewegt wird und die Pumpeinrichtung (20) und die Umwandlungseinrichtung (20) dauerhaft an der Oberfläche des Speichermediumvorrats gehalten werden.

**14.** Verfahren nach Anspruch 13, **dadurch gekennzeichnet, dass** bei Absinken oder Aufschwimmen der Speicherkammer (10) eine Verbindungseinrichtung (31) zwischen der Speicherkammer (10) und der Haltevorrichtung (30) vorgespannt oder entspannt wird.

**15.** Verfahren nach einem der Ansprüche 13 oder 14, **dadurch gekennzeichnet, dass** bei der Ausspeicherung des Speichermediums aus der Speicherkammer (10) die Pumpeinrichtung (20) von der Umwandlungseinrichtung (20) angetrieben wird.
